Europäisches Patentamt

European Patent Office

Office européen des brevets

(11) Publication number: **0 192 244**
**B1**

(12) **EUROPEAN PATENT SPECIFICATION**

(45) Date of publication of patent specification: **13.06.90**

(51) Int. Cl.⁵: **G 11 B 7/24**

(21) Application number: **86102099.8**

(22) Date of filing: **18.02.86**

(54) **An optical disc.**

(30) Priority: **18.02.85 JP 28221/85**
**18.03.85 JP 52369/85**
**17.02.86 JP 30653/86**

(43) Date of publication of application:
**27.08.86 Bulletin 86/35**

(45) Publication of the grant of the patent:
**13.06.90 Bulletin 90/24**

(84) Designated Contracting States:
**DE FR NL**

(56) References cited:
**EP-A-0 049 813**
**EP-A-0 109 245**
**EP-A-0 117 576**
**DE-A-2 721 334**
**DE-B-2 624 375**
**GB-A-2 087 129**

**Patent Abstracts Japan Vol 7 134 (p-203) (1279)**
**11.06.83. and JA-A-58-50636**

(73) Proprietor: **Hitachi Maxell Ltd.**
**No 1-1-88, Ushitora Ibaraki-shi**
**Osaka-fu (JP)**

(72) Inventor: **Higasihara, Tosio**
**3-3-7, Kubogaoka Moriya-cho**
**Kitasoma-gun Ibaragi (JP)**
Inventor: **Yoshizawa, Ken**
**1051-5, Yatabe Yatabe-cho**
**Tsukuba-gun Ibaragi (JP)**
Inventor: **Suzuki, Masahiro**
**3-6-8, Kubogaoka Moriya-cho**
**Kitasoma-gun Ibaragi (JP)**
Inventor: **Gotoh, Akira**
**1-2-5-504, Togashira**
**Toride-shi Ibaragi (JP)**
Inventor: **Tuburaya, Yoshitane**
**1-20-4, Daiwa**
**Takatsuki-shi Osaka (JP)**

(74) Representative: **von Kreisler, Alek, Dipl.-Chem et al**
**Patentanwälte Dr.-Ing. Schönwald Dr.-Ing. Eishold; Dr. Fues Dipl.-Chem. von Kreisler; Dipl.Chem. Keller Dipl.-Ing. Selting; Dr. Werner Deichmannhaus am Hauptbahnhof**
**D-5000 Köln 1 (DE)**

## Description

The invention relates to a process for manufacturing an optical disc according to the preamble of patent claim 1 and to an optical disc according to the preamble of patent claim 12.

The sectional view of an optical disc of the dual sided rotable type manufactured according to a prior art process is shown in Fig. 1 while the steps of the process are shown in Figs. 2 and 4.

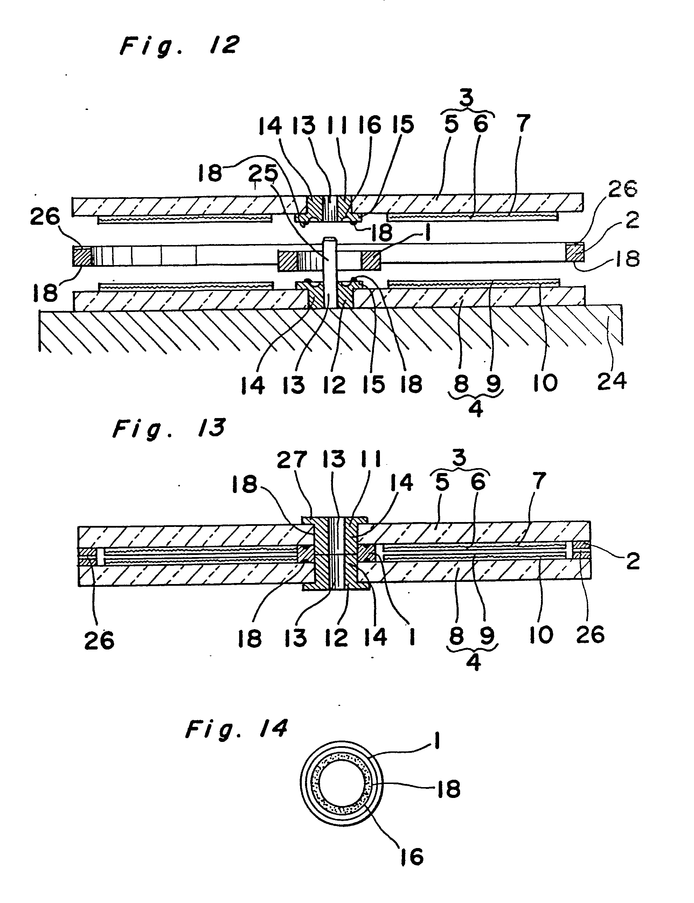

As shown in Fig. 11, two discs 53 are connected through a hub 51 and an outer spacer 52 so that the discs 53 face each other. Each disc 53 comprises a transparent disc substrate 54 and a recording layer 55 arranged on one side of the disc substrate 54. A plurality of pregrooves and/or prepits 56 are formed on the recording layer 55, and the two discs 53 are arranged so that the recording layers 55 face each other.

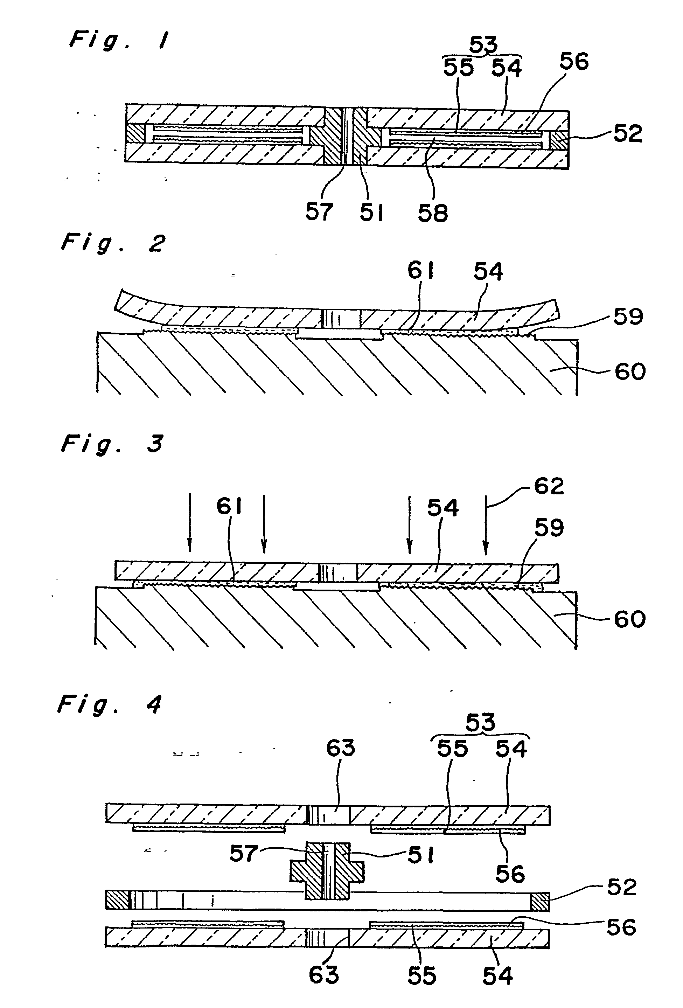

On the other hand, the hub 51 is made of a material with an abrasion resistance characteristic such as a metal, and a center hole 57 is formed at the centre of the hub 51 in order to position the optical disc at a predetermined position by inserting a motor spindle of a disc drive device into the center hole of the hub 51. In Fig. 1, there is a spacing 58 between the two discs 53.

Figs. 2 to 4 show a process for manufacturing the optical disc of Fig. 1. First of all, as shown in Fig. 2, a resin layer 61 consisting of an ultraviolet radiation hardening resin with fluidity before hardened is coated on a stamper 60, on the surface of which a number of concentric or spiral grooves 59 corresponding to the pregrooves 56 are formed. The disc substrate 54 is pressed on the resin layer 61 on the condition that it is curved so that its center portion is lower than its outer portion. That is, firstly the center portion of the disc substrate 54 is pressed on the center of the stamper 60, and subsequently the outer portion of the disc substrate 54 is pressed on the resin layer 61 arranged on the stamper 60. By this the resin layer 61 is spread towards the outer side of the disc substrate 54 without any bubble, and the resin fills the grooves 59.

Thereafter, ultraviolet radiation radiates onto the disc substrate 54 in the direction of the arrows 62 as shown in Fig. 3, thereby the resin layer 61 hardens. Next, when the disc substrate 54 is exfoliated from the stamper 60, the hardened resin layer 61 is separated from the stamper 60 together with the disc substrate 54. Then, the recording layer 55 is formed on the hardened resin layer 61 by a vapor evaporation process, thereby the recording layer 55 with the pregrooves 56 is formed on the disc substrate 54. Then the replica process is completed.

The two disc substrates 54 are respectively constructed with a hub 51 and an outer spacer 52 by positioning the hub 51 with respect to the pregrooves 56 of the two disc substrates 54 so that the one disc substrate faces the other disc substrate, thereby an optical disc is made as shown in Fig. 1.

In case of manufacturing a single sided optical disc, a hub having a shape of one half of the hub 51 is used. Such an optical disc is disclosed in DE 26 24 375 B2.

The process according to Figs. 2 to 4 has the following disadvantages. With respect to one disc substrate 54 it is difficult to accurately insert the hub 51 into the center through hole 63 of the disc substrate 54 so that the centre line of the hub 51 coincides with the center line of the disc substrate 54. Therefore, the reference points, i.e. the center line of the disc substrate 54 during forming the pregrooves 56 on the resin layer 61 might be shifted from the center line of the hub 51 after having been inserted into the hole 63. As a consequence, the write and read head of an optical disc recording and playing back device cannot track the pregrooves 56 so that the optical disc is unusable. Particularly recently, the information is recorded at higher density, wherein the width of the pregrooves 56 is about 0.4 to 0.8 µm and the pitch between adjacent pregrooves 56 becomes very small such as about 1.6 µm. Therefore, already a very small shift between the rotation center and the center of the pregrooves directly influences the writing and reading capability of the optical disc.

In case of the manufacturing of a dual sided optical disc, the necessity of arranging the center line of the hub accurately on the center lines of two disc substrates further decreases the productivity of the whole process and the reliability of the optical disc.

From EP 0 117 576 A1 there is known a single sided optical disc at the center of which a centering member serving as a hub for receiving the motor spindle of an optical disc having device is affixed. The centering member is affixed to one surface of the disc substrate after the tracks have been formed on the disc substrate. Therefore, also in this known optical disc there is the problem of accurately arranging the centering member relative to the optical disc so that the centre lines of the centering member and the disc substrate are not shifted. The disadvantages of the process and of this optical disc are the same as in case of the optical disc of Figs. 1 to 4.

It is an object of the invention to provide a process for manufacturing an optical disc in which process a high productivity is given and optical discs with a high reliability when recording and playing back information can be manufactured.

This object is solved by a process characterized by the steps mentioned in patent claim 1. The optical disc according to the invention is characterized by the features mentioned in claim 12. Useful embodiments and variations of the invention are mentioned in the subclaims.

In process according to the invention, the hub halves are inserted into the through holes of the disc substrates before the recording layers with the tracking information are formed on the disc substrates, respectively. Thus, the center portion of the hub half arranged in the disc substrate is used as the center point or the reference point, respectively, for the tracking information. By this, the center line of the hub halves automatically coincide with the rotation center of the optical disc. In the optical disc manufactured according to the present invention, the hub halves are arranged at the center of the disc substrates when forming the recording layer so that the tracking information can be formed on the disc substrates by using the center portion of the hub halves as reference points. Therefore, the center of the recording layer and the tracking information cannot be shifted from the center of the associated hub half, and an optical disc with high reliability with respect to recording and playing back information is provided.

Furthermore, it is easy to accurately position the two disc substrates with respect to each other because each of the two disc substrates is already accurately positioned in accordance with the center line of its hub half. It is merely necessary to bring the two hub halves in alignment with respect to each other so that the productivity of the process for manufacturing dual sided optical disc is also increased.

The optical disc according to the invention comprises a first and a second disc substrate each provided with a recording layer, the recording layers facing each other and having pregrooves. Each center of the pregrooves of the recording layer coincides with the center of the central hole provided in the associated hub half inserted in the associated disc substrate. The surfaces of said first and second hub halves, which surfaces are faced each other, are connected to each other as one body.

In connection with the attached figure several embodiments of the invention will be explained in detail wherein

Fig. 1 is a sectional view of an optical disc according to the prior art,

Figs. 2 to 4 are sectional views showing a process for manufacturing the optical disc of Fig. 1,

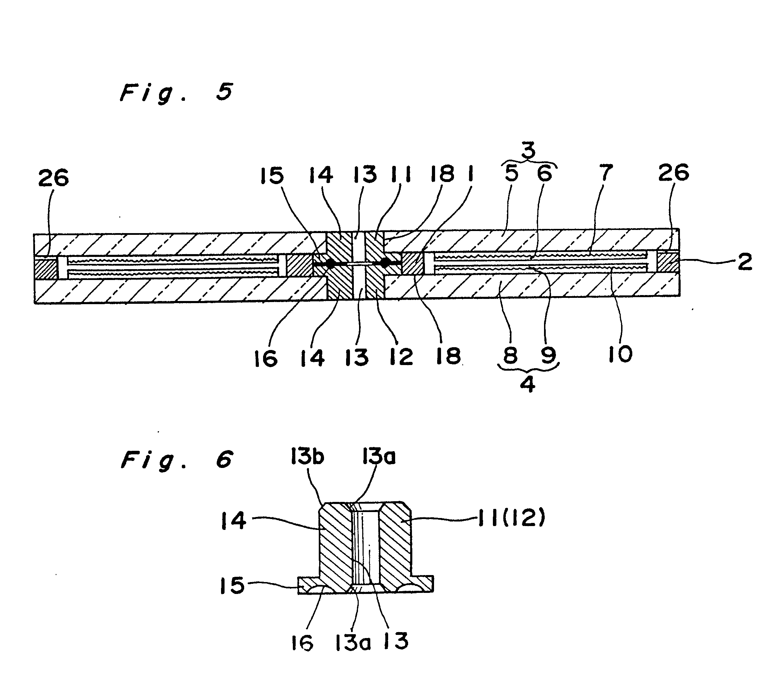

Fig. 5 is a sectional view of an optical disc of a first preferred embodiment according to the present invention,

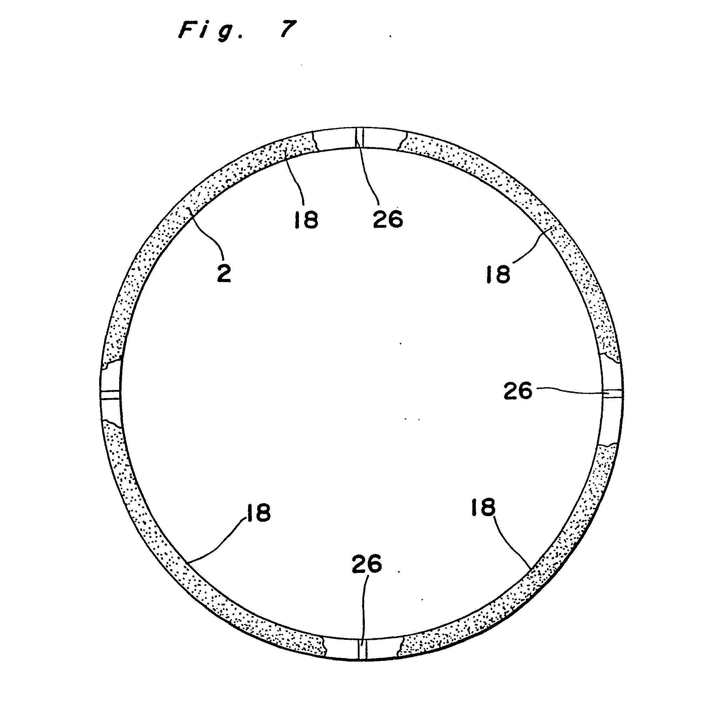

Fig. 6 is a sectional view of a cylindrical hub half of the optical disc shown in Fig. 5,

Fig. 7 is a plane view of an outer spacer of the optical disc shown in Fig. 5,

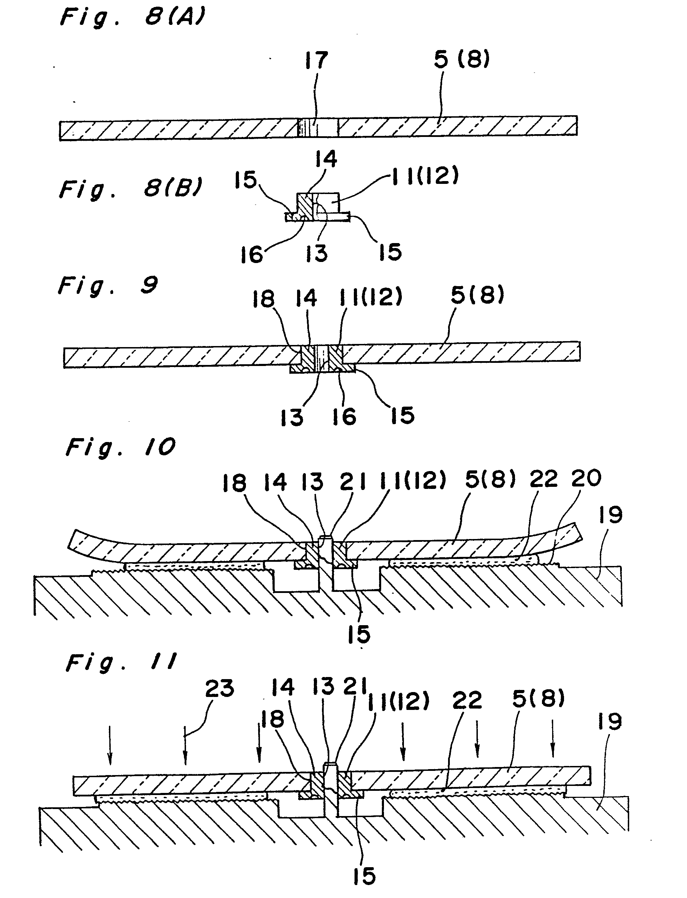

Figs. 8(A) and 8(B), and 9 through 12 are sectional views showing a process of making the optical disc shown in Fig. 5,

Fig. 13 is a sectional view of an optical disc of a second preferred embodiment according to the present invention,

Fig. 14 is a plane view of an inner space of the optical disc shown in Fig. 13,

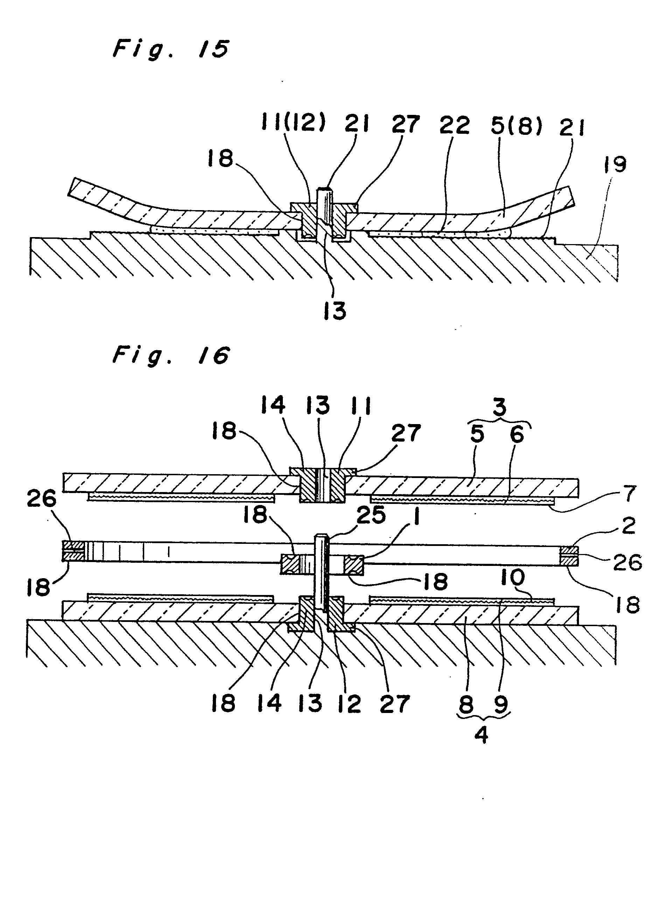

Figs. 15 and 16 are sectional views showing a process of making the optical disc shown in Fig. 13,

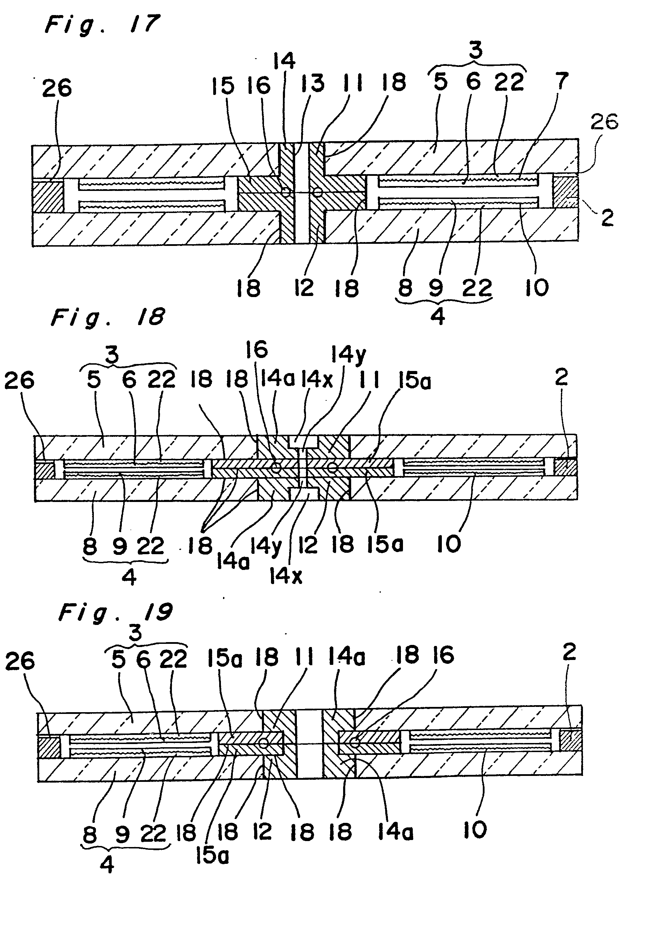

Fig. 17 is a sectional view of an optical disc of a third preferred embodiment according to the present invention,

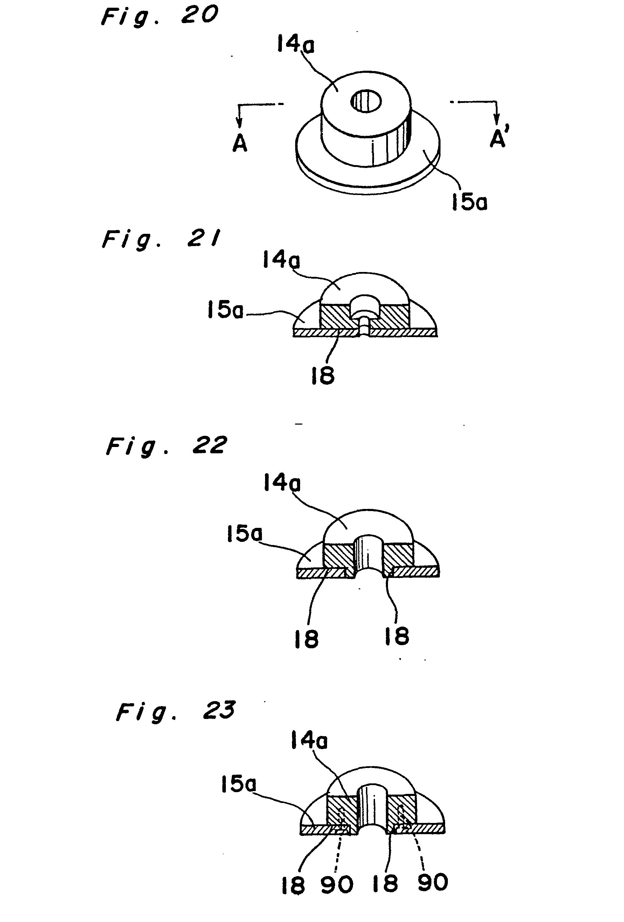

Figs. 18 and 19 are sectional views of optical disc of a fourth preferred embodiment according to the present invention,

Fig. 20 is a perspective view of a hub half body of the optical disc shown in Fig. 18,

Fig. 21 is a perspective sectional view of the hub half body on the line of A—A' shown in Fig. 20,

Fig. 22 is a perspective sectional view of a hub half body of the optical disc shown in Fig. 19.

Fig. 23 is a perspective sectional view of a hub half body constructed by screwing and bonding a flange portion on a cylindrical portion,

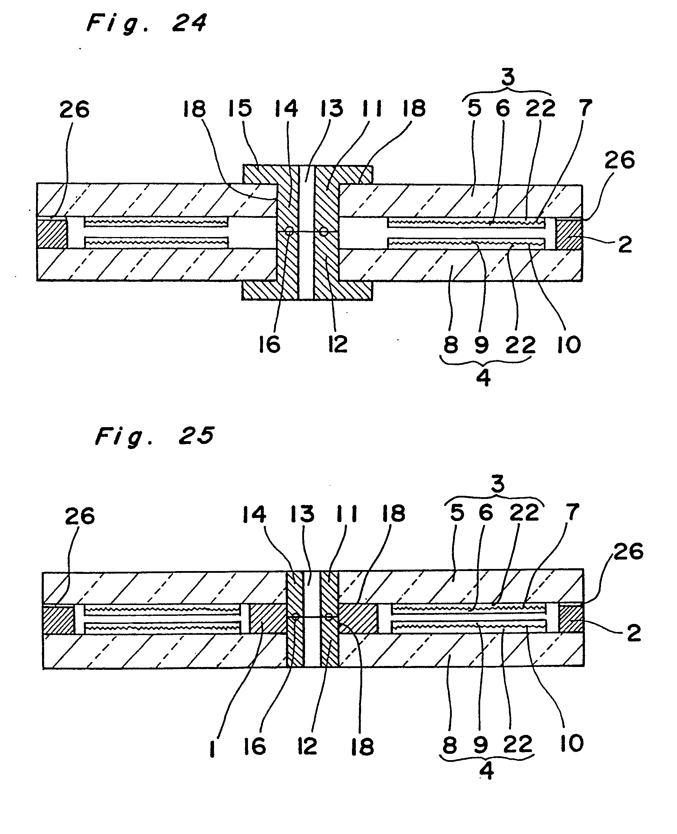

Fig. 24 is a sectional view of an optical disc of the fifth preferred embodiment according to the present invention, and

Fig. 25 is a sectional view of an optical disc of the sixth preferred embodiment according to the present invention.

Fig. 5 is a sectional view of a dual sided recordable type of an optical disc of a first preferred embodiment according to the present invention. In Fig. 5, a first disc 3 faces a second disc 4 through an inner spacer 1 and an outer spacer 2, each spacer having an annular shape. The first disc 3 comprises a first transparent disc substrate 5 and a first recording layer 6 arranged on one side of the first transparent disc substrate 5. First grooves 7 and presits in the spiral or concentric shape are formed on the first recording layer 6. The second disc 4 comprising a second disc substrate 8, a second recording layer 9 arranged on the second disc substrate 8, and second grooves 10 on the second recording layer 9 are provided similar to the first disc 3.

The two discs 3 and 4 are arranged so that the first recording layer 6 faces the second recording layer 9. A first hub half 11 is bonded at the center of the first disc substrate 5, and a second hub half 12 is bonded at the center of the second disc substrate 8. The hub half halves 11 and 12 are made of a metal whose coefficient of thermal expansion is nearly equal to the disc substrate 5 and 8, for example, the hub half halves 11 and 12 are made of an alloy of iron, nickel and chromium, containing nickel at 42 percent by weight and chromium at 6 percent by weight. As shown in Fig. 6, each of the hub halves 11 and 12 has the same shape and comprises a cylindrical portion 14 having a center hole 13 and an inner flange portion 15 in the shape of ring and arranged at the end of the cylindrical portion 14. The hub halves 11 and 12 are formed by processing an original member by a pressing process or a cutting process. A bonding recess 16 in an annular shape is formed in the end surface of the inner flange portion 15, and the inner and outer rim portion of the cylindrical portion 14 of the hub halves 11 and 12 are chamferred at 13a and 13b.

Fig. 7 is a plane view of the outer spacer. The outer spacer 2 and the inner spacer 1 are respectively made of a metal such as stainless and aluminum etc., ceramics, or composed resin such as epoxy resin and polycarbonate resin. One or more grooves 26 for letting air out of the inside of the optical disc are formed on the upper surface of the outer spacer 2 so that the grooves 26 pass through from the inside to the outside of the optical disc, as shown in Fig. 7.

A process of making the optical disc will be described below, referring to Figs. 8 through 12. First of all, a center hole 13 is formed precisely at the center of the hub half 11, as shown in Fig. 8(B), and through a hole 17 is formed at the center of the surface of the disc substrate 5, on which the recording layer 5 is not arranged, as shown in Fig. 8(A). On the other hand, the upper surface of the inner flange portion 15 and the outer rim surface of the cylindrical portion 14, of the hub half 11, are coated with a bonding material 18, then the cylindrical portion 14 is inserted into the through hole 17 of the disc substrates 5, thereby the hub half 11 is bonded on the disc substrate 5 as shown in Fig. 9. For example, a transparent bonding material such as ultraviolet rays hardening resin etc. is used as the bonding material 18, because the transparent bonding material 18 can not influence the appearance of the optical disc.

As shown in Fig. 10, there is provided a stamper 19 having concentric or spiral grooves 20 corresponding to the pregrooves and/or prepits 7, wherein the grooves 20 are formed on the upper surface of the stamper 19 with a positioning pin 21 projected from the surface of the stamper 19 at the center of the stamper 19 to position the disc substrates 5 on the stamper 19, and a predetermined quantity of the fluidity ultraviolet rays hardening resin not hardened is coated on the surface of the stamper 19. Then, the disc substrate 5 with the hub half 11 is pressed on the stamper 19.

As shown in Fig. 10, the disc substrate 5 is placed on the surface of the stamper 19 on the condition that the disc substrate 5 is curved so that the center portion of the disc substrate 5 is lower than the outer portion of the disc substrate 5, and the positioning pin 21 is inserted into the center hole 13 of the hub half 11, thereby it is possible to position the disc substrate 5 on the surface of the stamper 19. On that condition, when the disc substrate 5 is pressed on the surface of the stamper 19, the ultraviolet rays hardening resin 22 is spread toward the outer side without bubbles, the resin 22 not hardened is flowed into the grooves 20, and the grooves 20 is filled with the resin 22 not hardened.

After that, as shown in Fig. 11, the disc substrate 5 is radiated uniformly by the ultraviolet rays on the condition that the disc substrate 5 is pressed on the surface of the stamper 19, thereby the ultraviolet rays hardening resin 22, which is arranged between the stamper 19 and the disc substrate 5, hardens. Next, the disc substrate 5 is exfoliated from the stamper 19, then the hardened resin 22 is separated from the stamper 19 with the disc substrate 5, thereby the hardened resin 22, which becomes a transparent resin layer with the pregrooves and/or prepits 7 and the prepits not shown, is formed on the surface of the disc substrates 5.

The disc substrate 5 with the transparent resin layer 22 is arranged in the vacuum vapor evaporation device, which is the vacuum evaporator, the recording layer 6 is formed on the surface of the transparent resin layer 22 by the known vapor evaporation method. A metal with high optical reflectivity such as aluminum or an alloy of tellurium, selenium and lead etc. is used as the recording layer 6.

On the other hand, another disc 4 comprising the hub half 12, the disc substrate 8 and the recording layer 9 with the pregrooves and/or prepits 10 is made by the same process as the making process of the disc 3.

After the disc 3 comprising the recording layer 6 arranged on the transparent resin layer 22 and the disc 4 comprising the recording layer 9 arranged on the transparent resin layer 22 are made by the aforementioned replica process, the second disc 4 is arranged on the base stand 24, when the second disc 4 is positioned on the base stand 24 by inserting the center pole 25 arranged on the upper surface of the base stand 24 into the center hole 13 of the second hub half 12.

Next, the bonding material 18 is coated in the bonding recess 16 of the second hub half 12 and near the recess 16, then the inner spacer 1 and the outer spacer 2, whose top and bottom surfaces are coated with the bonding material 18, are arranged at the predetermined position of the disc 4. When the inner space 1 is arranged at the said position, the inner spacer 1 is positioned by engaging the inner space 1 in the flange portion 15 of the second hub half 12. The bonding material 18 is not coated at the grooves 26 and near the grooves 26 on the surface of the outer spacer 2 on which the grooves 26 are formed, in order not to close the grooves 26 with the bonding material 18.

Then, the first disc 3 comprising the first hub half 11 whose bottom surface is coated with the bonding material 18 is arranged on the inner spacer 1 and the outer spacer 2, the center pole 25 is inserted into the center hole 13 of the first hub half 1. Thereby, the first disc 3 and the second disc 4 are positioned at the proper position, and the hub halves 11 and 12 of two discs 3 and 4, the inner spacer 1 and the outer spacer 2 are bonded as one body, as a result, the optical disc is made as shown in Fig. 5.

The optical disc made as described above has spacings, which are the grooves 26 for letting air out of the inside of the optical disc, arranged between the outer spacer 2 and the disc substrate 5. The grooves 26 are useful for letting the gas, evolved when the bonding material 18 is firmed, out of the inside of the optical disc to the outside of the optical disc. The gas is preferably exhausted as described above, because the gas causes the recording layers 6 and 9 to change in quality when the gas evolves when the bonding material 18 is firmed, i.e. the mainly organic dissolving material remains in the inside of the optical disc. As the grooves 26 for letting the gas out of the inside of the optical disc are closed after the bonding material 18 is firmed, the inside of the optical disc is made airtight.

Fig. 13 is a sectional view of an optical disc of a second preferred embodiment, Fig. 14 is a plane view of an inner spacer used for the optical disc shown in Fig. 13, and Figs. 15 through 16 are sectional views showing a making process of the optical disc shown in Fig. 13.

In Fig. 13, the first hub half 11 and the second hub half 12 comprise a cylindrical portion 14 having a center hole 13 processed precisely and an outer flange portion 27, respectively, and the first hub half 11 and the second hub half 12 of the optical disc of the second preferred embodiment are made of an alloy of iron, nickel and chromium, containing nickel at 42 percent by weight and chromium at 6 percent by weight. As shown in Figs. 13 through 15, the bottom surface of the outer flange portion 27 and the outer surface of the cylindrical portion 14 are coated with the bonding material 18, then the first hub half 11 is bonded on the first disc substrate 5 as one body by inserting the cylindrical portion 14 of the hub half 11 into the center hole of the first substrate 5, on the other hand, the second hub half 12 is bonded on the second disc substrate 8 as one body by inserting the cylindrical portion 14 of the hub half 12 into the centre hole of the second disc substrate 8.

In the optical disc of the second preferred embodiment, bonding recesses 16 in the shape of a ring are formed on the top and bottom surface of the inner spacer 1. One and more grooves 26 used for letting the gas out of the inside of the optical disc are formed at the middle position in the axial direction so that the grooves 26 pass through from the inside to the outside of the optical disc. Arranging the grooves 26 at the middle position in the axial direction prevents the bonding material 18 described below from closing the grooves 26.

The making process of the optical disc of the second preferred embodiment will be described below. First of all, the hub half 11 is bonded at the center portion of the disc substrate 5 on which the recording layer 5 is not formed. In Fig. 15, the stamper 19 comprises concentric or spiral grooves 20, corresponding to the pregrooves and/or prepits 7, and a positioning pin 21 arranged at the center of the grooves 20 and projected from the surface of the stamper 19. As shown in Fig. 15, the aforementioned disc substrate 5 comprising the hub half 11 is arranged on the stamper 19 by inserting the positioning pin 21 into the centre hole 13 of the hub half 11 of the disc 3, on the condition that the disc substrate 5 with the hub half 11 is curved so that the center portion of the disc substrate 5 become lower than the other portion of the disc substrate 5.

Next, the disc substrate 5 is pressed completely on the stamper 19, then the ultraviolet rays radiate toward the upper surface of the disc substrate 5 pressing as described above, thereby the ultraviolet rays hardening resin 22, filled between the disc substrate 5 and stamper 19, hardens by the ultraviolet rays. Then, the disc substrate 5 comprising the hub half 5 and the resin 22 are exfoliated from the stamper 19. The disc substrate 5 comprising the hub half 5 and the resin 22 are arranged in the vacuum vapor evaporation device, then the recording layer 6 made of the metal with high optical reflectivity is formed by the same vapor deposition method as the method of the optical disc of the first preferred embodiment.

On the other hand, another disc 4 comprising a disc substrate 8, a recording layer 9 with pregrooves and/or prepits 10 and a hub half 12 is made by the same process as the making process of the disc 3 as described above.

As shown in Fig. 16, the second disc substrate 4 is arranged on the base stand 24 so that the center pole 25 is inserted into the center hole 13 of the second hub half 12. Then, the inner space 1 and the outer space 2, whose top and bottom surface are coated with the bonding material 18, are arranged at the predetermined position of the disc 4, thereby the inner spacer 1 is positioned at the predetermined position by engaging the inner spacer 1 in the outer surface of the cylindrical portion of the second hub half 12. Then, the first disc 3 is arranged on the inner spacer 1 and the outer spacer 2 so that the centre pole 25 is inserted into the centre hole 13 of the first hub half 11, thereby the first disc 3 and the second disc 4 are positioned at the predetermined proper position so that the center of the first disc 3 corresponds to the center of the second disc 4, and the two discs 3 and 4, and the inner spacer 1 and the outer spacer 2 are bonded as one body, as a result, the optical disc of the second preferred embodiment shown in Fig. 13 is made.

Fig. 17 is a sectional view of an optical disc of a third preferred embodiment according to the present invention, in which the inner spacer 1 used in the optical discs of the first and second preferred embodiments is omitted. In the optical disc shown in Fig. 17, each of the disc halves 3 and 4 is provided with a hub half 11 which is similar to the hub half 11 (or 12) of the optical disc of the first and second preferred embodiments except that the diameter of the flange portion 15 is larger than that of the hub half 11 (or 12). By using the hub half 11, the large diameter flange 15 can serve as the inner spacer to support the substrates 5 and 7, thus there is no need to use the separate inner spacer 1.

In Fig. 17, the outer surface of the cylindrical portion 14 and the inside surface of the flange portion 15 of the hub half 11, which is not the end surface, and the inner surface and the outer surface of the flange portion 15, are coated with the bonding material 18, then the cylindrical portion 14 of the two cylindrical hub halves 11 and 12 is inserted into the center hole of the disc substrates 5 and 8, respectively, thereby the cylindrical hub half 11 is bonded on the disc substrates 5 and 8, respectively. After that, the recording layers 6 and 9 are formed on the one side surface of the disc substrates 5 and 8 comprising the hub halves 11 and 12 made as described above by the same process as the process of the optical discs of the first and second preferred embodiments, respectively. After the bottom surface of the flange portion 15 of the two hub halves 11 and 12, facing each other, is coated with the bonding material 18, and the outer spacer 2 is arranged on the outer rim portion between the one side surface of the disc substrates 5 and 8, the optical disc of the third preferred embodiment is constructed so that the recording layer 6 faces the recording layer 9, as well as the optical discs of the first and second preferred embodiments. Fig. 17 shows the sectional view of the constructed optical disc of the third preferred embodiment. The optical disc of the third preferred embodiment has the two advantage described below. That is, one advantage is to simplify the making process because it is not necessary to bond the inner spacer 1 on the disc substrates 5 and 8 with bonding material 18, and other advantage is that the first disc 3 is bonded more strongly to the second disc 4 than the optical discs of the first and second preferred embodiments comprising the inner spacer 1, because the bonding area of the optical disc of the third preferred embodiment is wider than the bonding are of the optical discs of the first and second preferred embodiments.

Figs. 18 and 19 are sectional views of the optical disc of the fourth preferred embodiment. In the fourth preferred embodiment, each of the hub halves 11 is formed by a flange body 15a and a cylindrical body 14a, each body is prepared by separate members. The two flange bodies 15a and the two cylindrical bodies 14a are made respectively, so that the outer diameter of the flange body 15a is larger than the outer diameter of the flange portion 15 of the cylindrical hub half 11 of the optical disc of the third preferred embodiment shown in Fig. 17. Then the flange body 15a is bonded on the end surface of the cylindrical body 14a with the bonding material 18. The flange body 15a may be coupled with the cylindrical body 14a by being welded or screwed. Thus, the cylindrical hub half 11 comprising the cylindrical body 14a and the flange body 15a can be made.

In the making process of the optical disc of the fourth preferred embodiment, after the two cylindrical hub halves 11 and 12 are made and the surfaces of the hub halves 11 and 12 are coated with bonding material 18 similar to the hub halves 11 and 12 of the optical disc of the third preferred embodiment, the cylindrical body 14a of the hub half 11 is inserted into the center hole of the disc substrate 5 of the first disc 3, and the cylindrical body 14a of another hub half 11 is inserted into the center hole of the disc substrate 8 of the second disc 4. After the end surfaces of the flange bodies 15 of the two hub halves 11 and 12 are coated with the bonding material, the first disc 3 and the second disc 4 are connected together as one body with the outer spacer 2, so that the end surface of the cylindrical body 14a of one hub half 11 is bonded onto the end surface of the cylindrical body 14a of another hub half 12 and the recording layer 6 formed on the disc substrate 5 faces the recrding layer 9 formed on the disc substrate 8, thereby the optical disc of the fourth preferred embodiment shown is made without the inner spacer 1.

In the optical disc of the fourth preferred embodiment, the bonding area between the flange body 15a and the disc substrates 3 or 4 and between the cylindrical body 14a and the disc substrates 3 or 4 are wider than the bonding area of the optical disc of the third preferred embodiment shown in Fig. 17, because the outer diameter of the flange body 15a is greater than the outer diameter of the flange portion 15 of the hub half 11 shown in Fig. 17. The flange portion 15 of the hub half 11, with such a large outer diameter as the flange body 15a formed by punching a plate and shown in Figs. 18 and 19, cannot be made, since the flange portion 15 of the hub half 11, e.g. whose thickness is 0.3 mm, is formed by a cutting process. Therfore, the first disc 3 can be bonded more strongly through the two flange bodies 15a to the second disc 4 than the optical disc shown in Fig. 17, the optical disc of the fourth preferred embodiment can be rotated at the high speed such as 1200—3600 rpm and it is possible to access to the optical disc at high speed rate.

Fig. 18 is the sectional view of one of the optical discs of the fourth preferred embodiment. In Fig. 18, each of hub halves 11 and 12 is composed of a first cylindrical body 14a of a small diameter and a second cylindrical body 15a of a large diameter acting as the flange body 15a. The cylindrical bodies 14a and 15a are molded individually and they are bonded together to provide the hub halves 11 and 12 as shown in Fig. 20. There are defined, in the hub halves 11 and 12, a first hole 14x having a relatively large diameter enough to receive a standard pin of the recording and playing back device and a second hole 14y of a small diameter to provide a main cylindrical portion and a sub cylindrical portion. The end surface of the main cylindrical portion of the first cylindrical body 14a is bonded on the second cylindrical body 15a whose inner diameter of the hole 14y of the main cylindrical portion of the first cylindrical body 14a. The outer diameter of the flange body 15a is larger than the outer diameter of the second cylindrical portion 15 of the hub half 11 shown in Fig. 17, thereby, the bonding area between the disc substrates 3 or 4 and the end surface of the second cylindrical body 15a is wider than the bonding area between the disc substrate 3 or 4 and the flange portion 15 of the cylindrical hub half 11 shown in Fig. 17. Also the bonding area of both second cylindrical bodies 15a shown in Fig. 18 is wider than the bonding area of the second cylindrical portions 15 of the hub half 11 shown in Fig. 17. Therefore, two disc substrates 5 and 8 can be bonded together strong through the flange bodies 15a and the outer spacer 2 as shown in Fig. 18.

Figs. 19 and 22 show a modification of the hub half body of the optical disc of the fourth preferred embodiment. In Figs. 19 and 22, the cylindrical hub half body 14a comprises a main cylindrical portion and a sub cylindrical portion, wherein the outer diameter of the sub cylindrical portion is shorter than the outer diameter of the main cylindrical portion of the cylindrical body 14a and the inner diameter of the sub cylindrical body is equal to the inner diameter of the main cylindrical portion, and the thickness of the flange body 15a is equal to the axial length of the sub cylindrical portion. The sub cylindrical portion is inserted into the central hole of the flange body 15a and the flange body 15a is bonded onto the cylindrical body 14a, so that the inner surface of the flange body 15a faces the outer surface of the sub cylindrical portion of the cylindrical body 14a, thereby the cylindrical hub half body 11 is constructed.

Fig. 23 is a perspective sectional view of a screwed hub half body of the cylindrical body 14a and the flange body 15a of the optical disc shown in Fig. 19. The flange body 15a may be screwed and bonded on the cylindrical body 14a with one or more screws 90 as shown in Fig. 23, and also the flange body 15a may be only screwed on the cylindrical body 14a.

According to the fourth preferred embodiment shown in Figs. 18 and 19, the optical disc has the advantage that it is possible to adjust the length of the flange of the flange body 15a corresponding to the outer diameter minus the inner diameter of the flange body 15a, so that the optical disc has a required mechanical strength, whereby it can be accessed at high speed.

The bonding recess 16 may be formed on the end surface of the flange portion 15 of the cylindrical hub half 11 shown in Fig. 17, or the end surface of the flange body 15a shown in Figs. 18 and 19, which are facing each other.

Fig. 24 shows an optical disc of a fifth preferred embodiment according to the present invention, comprising two cylindrical hub halves 11 and 12 having a cylindrical portion 14 and a flange portion 15 arranged on the end surface of the cylindrical portion 14. In Fig. 24, the end surface of the cylindrical portion 14 of the hub half 11, where the flange portion 15 is not formed, is bonded on the end surface of the cylindrical portion of another hub half 12 and another inside surface of the flange portion 15 of the cylindrical hub halves 11 and 12 is bonded on the outer surface of the disc substrates 5 and 8, respectively. The outer surfaces of the cylindrical portions 14 of the hub halves 11 and 12 are bonded on the inner surfaces of the center holes of the disc substrates 5 and 8, respectively. As shown in Fig. 24, as the flange portion 15 of the cylindrical hub half 11 is arranged at the outside of the optical disc, an adapter arranged on the turn table is required when the optical disc is set on the turn table. However, the coefficient of friction between the turn table and the optical disc become bigger than the aforementioned optical disc such as the optical discs of the first, third and fourth preferred embodiments shown in Figs. 5, 17, 18 and 19, because the outside area of the hub half 11 shown in Fig. 24 is wider than the outside area of the hub half 11 shown Figs. 5, 17, 18 and 19. Therefore, the optical disc shown in Fig. 24 can be accessed at high speed.

Fig. 25 shows an optical disc of a sixth preferred embodiment according to the present invention, comprising an inner spacer 1 and two cylindrical hub halves 11 and 12 without a flange portion. In Fig. 25, the outer surface of the two cylindrical hub halves 11 and 12 are bonded on the inner surface of the inner spacer 1, and the top and bottom surfaces of the inner spacer 1 are bonded on the disc substrates 5 and 8 respectively, thereby the inner spacer 1 acts as well as the flange portion 15 of the cylindrical hub half 11 of the optical discs of the third and fourth preferred embodiments. That is, bonding among the inner spacer 1, the disc substrate 5 and 8, and the cylindrical hub halves 11 and 12 can improve the bonding intensity between the disc substrates 5 and 8.

The pregrooves and/or prepits in the optical disc for recording may be formed in a spiral or concentric shape.

## Claims

1. Process for manufacturing an optical disc comprising the steps of

— providing a central through hole (17) in each of a first and a second disc substrates (5, 8),

— forming a recording layer (6) on one surface of each of said first and second disc substrates (5, 8), said recording layer (6) having at least a tracking information, and

— connecting said first substrate (5) to said second disc substrate (8) with said recording layer (6) facing each other, characterized by

— providing a central hole (13) in each of a first and a second hub halves (11, 12),

— inserting said first hub half (11) into said central through hole (17) of said first disc substrate (5) and said second hub half (12) into said central through hole (17) of said second disc substrate (8),

— forming said recording layer (6) on said first and second disc substrates (5, 8) by using the central hole (13) of respective said first and second hub halves (11, 12) as a reference point for said tracking information, and

— aligning said central hole (13) of said first hub half (11) of said first disc substrate (5) with said central hole (13) of said second hub half (12) of said second disc substrate (8), said first and second hub halves (11, 12) being connected to each other.

2. Process according to claim 1, characterized in that said tracking information is formed on said first and second disc substrates (5, 8) by pressing a stamper (19) having at least one groove (7) on its surface on each of said first and second disc substrates (5, 8), whereby said first and second disc substrates (5, 8) are positioned relative to said stamper (19) by inserting a spindle (21) provided at said stamper (19) into the central hole of said first and second hub halves (11, 12), respectively.

3. Process according to claim 2, characterized in that said spindle (12) has such a diameter that its outer cylindrical surface adheres to the inner cylindrical surface of the central hole of said first and second hub halves (11, 12) when inserted therein.

4. Process according to claim 1 or 2, characterized in that said first and second hub halves (11, 12) each are provided with a cylindrical portion (14; 14a) being inserted into the central hole of said first and second disc substrates (5, 8) respectively.

5. Process according to claim 4, characterized in that said first and second hub halves (11, 12) each are provided with a flange portion (15; 15a) at the one end of said cylindrical portion (14; 14a) and that the flange portion (15; 15a) of said first hub half (11) is connected to the flange portion (15; 15a) of said second hub half (12).

6. Process according to claim 5, characterized in that the flange portion (15; 15a) of said first hub half (11) faces the flange portion (15; 15a) of said second hub half (12).

7. Process according to claim 5 or 6, characterized in that the flange portion (15; 15a) are connected through a bonding material (18).

8. Process according to claim 5 or 6, characterized in that a bonding recess (16) is formed on at least one end surface of said flange portions (15; 15a) of said first and second hub halves (11, 12) and that said recess (16) is filled with a bonding material (18).

9. Process according to any one of claims 4 to 8, characterized in that said first disc substrate (5) is connected to said first hub half (11) through a bonding material (18), said second disc substrate (8) is conected to said second hub half (12) through a bonding material (18), and that an inner spacer (1) is arranged between said first and second disc substrates (5, 8), said inner spacer (1) is connected to the outer surfaces of the cylindrical portions (14; 14a) of said first and second hub halves (11, 12) and to said first and second disc substrates (5, 8) through a bonding material (18).

10. Process according to any one of claims 5 to 8, charaterized in that said disc substrate (5) is connected to said first hub half (11) through a bonding material (18), said second disc substrate (8) is connected to said second hub half (12) through a bonding material (18), and that an inner spacer (1) is arranged at the outside of the flange portions (15) of said first and second hub halves (11, 12), said inner spacer (1) is connected to the flange portions (15; 15a) of said first and second hub halves (11, 12) and to said first and second disc substrates (5, 8) through a bonding material (18).

11. Process according to any one of claims 1 to 10, characterized in that said first and second disc substrates (5, 8) are made of glass and that said first and second hub halves (11, 12) are made of an alloy of iron, nickel and chromium, said alloy contains nickel at 42 percent by weight and chromium at 6 percent by weight.

12. Optical disc comprising

— a first disc substrate (5) provided with a central through hole (17) in which a cylindrical portion (14; 14a) of a first hub half (11) is inserted, said first hub half (11) having a central hole (13),

— a second disc substrate (8) provided with a central through hole (17) in which a cylindrical portion (14; 14a) of a second hub half (12) is inserted, said second hub half (12) having a central hole (13),

— a recording layer (6) on each of said first and second disc substrates (5, 8), said recording layer (6) having pregrooves (7) and said first and second disc substrates (5, 8) being connected to each other with said recording layer (6) facing each other, characterized in

— that said first and second hub halves (11, 12) are inserted into the first and second disc substrates (5, 8), respectively, when forming the pregrooves (7) so that each center of the pregrooves (7) of said recording layer (6) and said first and second disc substrates (5, 8) coincides with the center of the central hole (13) of said associated hub halves (11, 12) and

— that the surfaces of said first and second hub halves (11, 12) facing each other are connected to each other.

13. Optical disc according to claim 12, characterized in that said first and second hub halves (11, 12) each are provided with a flange portion (15; 15a) at the one end of said cylindrical portion (14; 14a) and that the flange portion (15; 15a) of said first hub half (11) is connected to the flange portion (15; 15a) of said second hub half (12).

14. Optical disc according to claim 12 or 13, characterized in that said first and second hub halves (11, 12) each comprises a cylindrical body (14; 14a) and a flange body (15; 15a) in an annular shape respectively, said flange body (15; 15a) being connected to said cylindrical body (14; 14a) as one body.

15. Optical disc according to claim 14, characterized in that said flange body (15; 15a) is connected to said cylindrical body (14; 14a) through a bonding material (18).

16. Optical disc according to any one of claims 13 to 15, characterized in that said flange portion (15; 15a) of said first hub half (11) is connected to said flange portion (15; 15a) of said second hub half (12) through a bonding material (18), said flange portion (15; 15a) of said first hub half (11) facing said flange portion (15; 15a) of said second hub half (12).

17. Optical disc according to any one of claims 13 to 16, characterized in that a bonding recess (16) is formed on at least one end surface of said flange portions (15; 15a) of said first and second hub halves (11, 12) and that said recess (16) is filled with a bonding material (18).

18. Optical disc according to any one of claims 13 to 17, characterized in that said first disc substrate (5) is connected to said first hub half (11) through a bonding material (18), said second disc substrate (8) is connected to said second hub half (12) through a bonding material (18), and that an inner spacer (1) is arranged between said first and second disc substrates (5, 8), said inner spacer (1) is connected to the outer surfaces of the cylindrical portions (14; 14a) of said first and second hub halves (11, 12) and to said first and second disc substrates (5, 8) through a bonding material (18).

19. Optical disc according to any one of claims 13 to 17, characterized in that said first disc substrate (5) is connected to said first hub half (11) through a bonding material (18), said second disc substrate (8) is connected to said second hub half (12) through a bonding material (18), and that an inner spacer (1) is arranged at the outside of the flange portions (15; 15a) of said first and second hub halves (11, 12), said inner spacer (1) is connected to the flange portions (15; 15a) of said first and second hub halves (11, 12) and to said first and second disc substrates (5, 8) through a bonding material (18).

20. Optical disc according to claim 12, characterized in that said first and second hub halves (11, 12) have one surface of its flange portions (14; 14a) provided with a cylindrical member and said first hub half (11) and said second hub half (12) are joint in a symmetrical shape.

21. Optical disc according to any one of claims 12 to 20, characterized in that said respective central hole (13) of said first and second hub halves (11, 12) has such in outer diameter that its inner cylindrical surfaces adhere to the central axis (21) of a stamper (19) for forming said recording layer (6) so that the central axis of said respective central hole (13) coinciding with the center of said stamper (19).

22. Optical disc according to any one of claims 12 to 21, characterized in that said central hole (13) of said first hub half (11) of said first disc substrate (5) and said central hole (13) of said second hub half (12) of said second disc substrate (8) are smoothly connected.

**Patentansprüche**

1. Verfahren zum Herstellen einer optischen Scheibe, mit den folgenden Verfahrenschritten:
— Schaffen eines zentralen Durchgangsloches (17) in einem ersten une einem zweiten Scheibensubstrat (5, 8),
— Bilden einer Aufzeichnungsschicht (6) auf einer Oberfläche des ersten und des zweiten Scheibensubstrates (5, 8), wobei die Aufzeichnungsschict (6) mindestens eine Nachführinformation enthält, und
— Verbinden des ersten Scheibensubstrates (5) mit dem zweiten Scheibensubstrat (8), wobei die Aufzeichnungsschichten (6) einander zugewandt sind, gekennzeichnet, durch
— Schaffen eins zentralen Loches (13) in einer ersten und einer zweiten Nabenhälfte (11, 12),
— Einsetzen der ersten Nabenhlälfte (11) in das zentrale Durchgangsloch (17) des ersten Scheibensubstrates (5) und der zweiten Nabenhälfte (12) in das zentrale Durchgangsloch (17) des zweiten Scheibensubstrates (8),
— Bilden der Aufzeichnungsschicht (6) auf dem ersten und dem zweiten Scheibensubstrat (5, 8), indem das zentrale Loch (13) der ersten bzw. zweiten Nabenhälfte (11, 12) als Referenzpunkt für die Nachführinformation verwendet wird,
— fluchtendes Ausrichten des zentralen Loches (13) der ersten Nabenhälfte (11) des ersten Schiebensubstrates (5) und des zentralen Lcohes (13) der zweiten Nabenhälfte (12) des zweiten Scheibensubstrates (8), wobei die erste und die zweite Nabenhälfte (11, 12) miteinander verbunden werden.

2. Verfahren nach Anspruch 1, dadurch gekennzeichnet, daß die nachführinformation auf dem ersten und dem zweiten Scheibensubstrat (5, 8) gebildet wird, indem ein an seiner Oberfläche mit mindestens einer Nut (7) versehener Stempel (19) auf das erste und das zweite Scheibensubstrat (5, 8) gepreßt wird, wobei das erste und das zweite Scheibensubstrat (5, 8) relativ zu dem Stempel (19) in Position gebracht werden, indem eine am Stempel (19) vorgesehene Spindel (21) in das zentrale Loch der ersten bzw. der zweiten Nabenhälfte (11, 12) eingeführt wird.

3. Verfahren nach Anspruch 2, dadurch gekennzeichnet, daß die Spindel (21) einen solchen Durchmesser hat, daß ihre zylindrische Außenfläche an der zylindrischen Innenfläche des zentralen Loches der ersten und der zweiten Nabenhälfte (11, 12) anliegt, wenn die Spindel (21) in das zentrale Loch eingeführt wird.

4. Verfahren nach Anspruch 1 oder 2, dadurch gekennzeichnet, daß die erste und die zweite Nabenhälfte (11, 12) jeweils einen zylindrischen Abschnitt (14; 14a) aufweist, der in das zentrale Loch des ersten bzw. des zweiten Scheibensubstrates (5, 8) eingesetzt wird.

5. Verfahren nach Anspruch 4, dadurch gekennzeichnet, daß die zweite Nabenhälfte (11, 12) jeweils einen Flanschbereich (15; 15a) an einem Ende des zylindrischen Abschnittes (14; 14a) aufweist und daß der Flanschbereich (15; 15a) der ersten Nabenhälfte (11) mit dem Flanschbereich (15; 15a) der zweiten Nabenhälfte (12) verbunden wird.

6. Verfahren nach Anspruch 5, dadurch gekennzeichnet, daß der Flanschbereich (15; 15a) der ersten Nabenhälfte (11) dem Flanschbereich (15; 15a) der zweiten Nabenhälfte (12) zugewandt ist.

7. Verfahren nach Anspruch 5 oder 6, dadurch gekennzeichnet, daß die Flanschbereiche (15; 15a) durch ein Verbindungsmaterial (18) verbunden werden.

8. Verfahren nach Anspruch 5 oder 6, dadurch gekennzeichnet, daß eine Verbindungsvertiefung (16) an mindestens einer Stirnfläche der Flanschbereiche (15; 15a) der ersten und der zweiten Nabenhälfte (11, 12) ausgebildet wird, und daß die Vertiefung (16) mit einem Verbindungsmaterial (18) gefüllt wird.

9. Verfahren nach einem der Ansprüche 4 bis 8, dadurch gekennzeichnet, daß das erste Scheibensubstrat (5) durch ein Verbindungsmaterial (18) mit der ersten Nabenhälfte (11) und das zweite Scheibensubstrat (8) durch ein Verbindungsmaterial (18) mit der zweiten Nabenhälfte (12) verbunden wird, und daß zwischen dem ersten und dem zweiten Scheibensubstrat (5, 8) ein innere Abstandhalter (1) angeordnet wird, der durch ein Verbindungsmaterial (18) mit den Außenflächen der zylindrischen Abschnitte (14; 14a) der ersten und der zweiten Nabenhälfte (11, 12) und mit dem ersten und dem zweiten Scheibensubstrat (5, 8) verbunden wird.

10. Verfahren nach einem der Ansprüche 5 bis 8, dadurch gekennzeichnet, daß das erste Scheibensubstrat (5) durch ein Verbindungsmaterial (18) mit der ersten nabenhälfte (11) und das zweite Scheibensubstrat (8) durch ein Verbindungsmaterial (18) mit der zweiten Nabenhälfte (12) verbunden wird, und daß an der Außenseite der Flanschbereiche (15) der ersten und der zweiten Nabenhälfte (11, 12) ein innerer Abstandhalter (1) angeordnet wird, de durch ein Verbindungsmaterial (18) mit den Flanschbereichen (15) der ersten und der zweiten Nabenhälfte (11, 12) und mit dem ersten und dem zweiten Scheibensubstrat (5, 8) verbunden wird.

11. Verfahren nach einem der Ansprüche 1 bis 10, dadurch gekennzeichnet, daß das erste und das zweite Scheibensubstrat (5, 8) aus Glas und die erste und die zweite Nabenhälfte (11, 12) aus einer Legierung aus Eisen, Nickel und Chrom gefertigt werden, wobei die Legierung 42 Gewichtsprozent Nickel und 6 Gewichtsprozent Chrom enthält.

12. Optische Scheibe mit
— einem ersten Scheibensubstrat (5) mit einem zentralen Durchgangsloch (17), in das ein zylindrischer Abschnitt (14; 14a) einer zweiten Nabenhälfte (12) eingesetzt ist, die mit einem zentralen Loch (13) versehen, ist,
— einem zweiten Scheibensubstrat (8) mit einem zentralen Durchgangsloch (17), in das ein zylindrischer Abschnitt (14; 14a) einer zweiten Nabenhälfte (12) eingesetzt ist, die mit einem zentralen Loch (13) versehen ist,
— einer Aufzeichnungsschicht (6) auf dem ersten und dem zweiten Scheibensubstrat (5, 8), wobei die Aufzeichnungsschicht (6) mit Vornuten (7) versehen ist, und das erste und das zweite Scheibensubstrat (5, 8) miteinander verbunden und die Aufzeichnungsschichten (6) einander zugewandt sind, dadurch gekennzeichnet,
— daß die erste und die zweite Nabenhälfte (11, 12) in das erste bzw. das zweite Scheibensubstrat (5, 8) so eingesetzt sind, daß zweite Scheibensubstrat (5, 8) so eingesetzt sind, daß beim Ausbilden der Vornuten (7) jeder Mittelpunkt der Vornuten (7) der Aufzeichnungsschicht (6) des ersten und des zweiten Scheiben substrates (5, 8) mit dem Mittelpunkt des zentralen Loches (13) der zugehörigen Nabenhälften (11, 12) übereinstimmt, und
— daß die einander zugewandten Flächen der ersten und der zweiten Nabenhälfte (11, 12) miteinander verbunden sind.

13. Optische Scheibe nach Anspruch 12, dadurch gekennzeichnet, daß die erste und die zweite Nabenhälfte (11, 12) jeweils mit einem an einem Ende des zylindrischen Abschnittes (14; 14a) angeordneten Flanschbereich (15; 15a) versehen sind und der Flanschbereich (15; 15a) der ersten Nabenhälfte (11) mit dem Flanschbereich (15; 15a) der zweiten Nabenhälfte (12) verbunden ist.

14. Optische Scheibe nach Anspruch 12 oder 13, dadurch gekennzeichnet, daß die erste und die zweite Nabenhälfte (11, 12) jeweils einen zylindrischen Körper (14; 14a) und einen Flanschkörper (15; 15a) aufweisen, die jeweils ringförmig ausgebildet sind, wobei der Flanschkörper (15; 15a) mit dem zylindrischen Körper (14; 14a) zu einem Körper verbunden ist.

15. Optische Scheibe nach Anspruch 14, dadurch gekennzeichnet, daß der Flanschkörper (15; 15a) durch ein Verbindungsmaterial (18) mit dem zylindrischen Körper (14; 14a) verbunden ist.

16. Optische Scheibe nach einem der Anspruch 13 bis 15, dadurch gekennzeichnet, daß der Flanschbereich (15; 15a) der ersten Nabenhälfte (11) durch ein Verbindungsmaterial (18) mit dem Flanschbereich (15; 15a) der zweiten Nabenhälfte (12) verbunden ist, wobei der Flanschbereich (15; 15a) der ersten Nabenhälfte (11) dem Flanschbereich (15; 15a) der zweiten Nabenhälfte (12) zugewandt ist.

17. Optische Scheibe nach einem der Ansprüche 13 bis 16, dadurch gekennzeichnet, daß eine Verbindungsvertiefung (16) an mindestens einer Stirnfläche der Flanschbereiche (15; 15a) der ersten und der zweiten Nabenhälfte (11, 12) ausgebildet ist und daß die Vertiefung (16) mit einem Verbindungsmaterial (18) gefüllt ist.

18. Optische Scheibe nach einem der Ansprüche 13 bis 17, dadurch gekennzeichnet, daß das erste Scheibensubstrat (5) durch ein Verbindungsmaterial (18) mit der ersten Nabenhälfte (11) und das zweite Scheibensubstrat (8) durch ein Verbindungsmaterial (18) mit der zweiten Nabenhälfte (12) verbunden ist, und daß zwischen dem ersten und dem zweiten Scheibensubstrat (5, 8) ein innerer Abstandhalter (1) angeordnet ist, der durch ein Verbindungsmaterial (18) mit den Außenflächen der zylindrischen Abschnitte (14; 14a) der ersten und der zweiten Nabenhälfte (11, 12) und mit dem ersten und dem zweiten Scheibensubstrat (5, 8) verbunden ist.

19. Optische Scheibe nach einem der Ansprüche 13 bis 17, dadurch gekennzeichnet, daß das erste Scheibensubstrat (5) durch ein Verbindungsmaterial (18) mit der ersten Nabenhälfte (11) und das zweite Scheibensubstrat (8) durch ein Verbindungsmaterial (18) mit der zweiten Nabenhälfte (12) verbunden ist, und daß an der Außenseite der Flanschbereiche (15; 15a) der ersten und der zweiten Nabenhälfte (11, 12) ein innerer Abstandhalter (1) angeordnet ist, der durch ein Verbindungsmaterial (18) mit den Flanschbereichen (15; 15a) der ersten und der zweiten Nabenhälfte (11, 12) und mit dem ersten und dem zweiten Scheibensubstrat (5, 8) verbunden ist.

20. Optische Scheibe nach Anspruch 12, dadurch gekennzeichnet, daß deie erste und die zweite Nabenhälfte (11, 12) an einer Fläche ihrer Flanschbereiche (15, 15a) mit einem zylindrischen Teil versehen sind, und daß die erste Nabenhälfte (11) und die zweite Nabenhälfte (12) zu einer symmetrischen Forme zusammengefügt sind.

21. Optische Scheibe nach einem der Ansprüche 12 bis 20, dadurch gekennzeichnet, daß .das jeweilige zentrale Loch (13) der ersten und der zweiten Nabenhälfte (11, 12) einen solchen Außendurchmesser hat, daß seine inneren zylindrischen Flächen an der Mittelachse (21) eines Stempels (19) zum Formen der Aufgzeichnungsschicht (6) so anliegen, daß die Mittelachse des jeweiligen zentralen Loches (13) mit dem Zentrum des Stempels (19) übereinstimmt.

22. Optische Scheibe nach einem der Ansprüche 12 bis 21, dadurch gekennzeichnet, daß das zentrale Lock (13) der ersten Nabenhälfte (11) des ersten Scheibensubstrats (5) und das zentrale Loch (13) der zweiten nabenhälfte (12) des zweiten Scheibensubstrats (8) ohne Versatz miteinander verbunden sind.

**Revendications**

1. Procéde de fabrication d'un disque optique, comprenant les étapes suivantes:
— la formation d'un trou central débouchant (17) dans chacun d'un premier et d'un second substrat (5, 8) de disque,
— la formation d'un couche d'enregistrement (6) sur une première surface de chacun des premier et second substrats (5, 8), la couche d'enregistrement (6) ayant au moins des informations de poursuite, et
le raccordement du premier substrat (5) au second substrat (8) avec les couches d'enregistrement (6) tournées l'une vers l'autre, caractérisé par:
— la formation d'un trou central (13) dans chacun des premier et second demi-moyeux (11, 12),
— l'introduction du premier demi-moyeu (11) dans le trou central débouchant (17) du premier substrat (5) et du second demi-moyeu (12) dans le trou central débouchant (17) du second substrat (8),
— la formation de la couche d'enregistrement (6) sur le premier et le second sustrat (5, 8) à l'aide du trou central (13) du premier et du second demi-moyeu respectifs (11, 12) comme point de référence pour les informations de poursuite, et
— l'alignement du trou central (13) du premier demimoyeu (11) du premier substrat (5) sur le trou central (13) du second demi-moyeu (12) du second substrat (8), le premier et le second demi-moyeu (11, 12) étant raccordés l'une à l'autre.

2. Procédé selon la revendication 1, caractérisé en ce que les informations de poursuite sont formées sur le premier et le second substrat (5, 8) par application d'un poinçon (19) ayant au moins une gorge (7) à sa surface sur chacun des premier et second substrats (5, 8), si bien que le premier et le second substrat (5, 8) sont positionnés par rapport au poinçon (19) par introduction d'un broche (21) formée sur le poinçon (19) dans le trou central du premier et du second demi-moyeu (11, 12) respectivement.

3. Procédé selon la revendication 2, caractérisé en ce que la broche (21) a un diamètre tel que sa surface cylindrique externe adhère à la surface cylindrique interne du trou central du premier et du second demi-moyeu (11, 12) lorsqu'elle est introduite dans ce trou.

4. Procédé selon la revendication 1 ou 2, caractérisé en ce que le premier et le second demi-moyeu (11, 12) ont chacun une partie cylindrique (14; 14a;) qui est introduite dans le trou central du premier et du second substrat (5, 8) respectivement.

5. Procédé selon la revendication 4, caractérisé en ce que le premier et le second demi-moyeu (11, 12) ont chacun une partie de flasque (15; 15a) à une première extrémité de la partie cylindrique (14; 14a), et la partie de flasque (15; 15a) du premier demi-moyeu (11) est raccordée à la partie de flasque (15; 15a) du second demi-moyeu (12).

6. Procédé selon la revendication 1, caractérisé en ce que la partie de flasque (15; 15a) du premier demi-moyeu (11) est tournée vers la partie de flasque (15; 15a) du second demi-moyeu (12).

7. Procédé selon la revendication 5 ou 6, caractérise en ce que les parties de flasques (15; 15a) sont raccordées par une matière de collage (18).

8. Procédé selon la revendication 5 ou 6, caractérisé en ce qu'une cavité de collage (16) est formée sur une surface d'extrémité au moins des parties de flasque (15; 15a) du premier et du second demi-moyeu (11, 12), et la cavité (16) est remplie d'une matière de collage (18).

9. Procédé selon l'un quelconque des revendications 4 à 8, caractérisé en ce que le premier substrat (5) est raccordé au premier demi-moyeu (11) par une matière de collage (18), le second substrat (8) est raccordé au second demi-moyeu (12) par une matière de collage (18), et une entretoise interne (1) est placée entre le premier et le second substrat (5, 8), l'entretoise interne (1) étant racordée aux surfaces externes des parties cylindriques (14; 14a) du premier et du second demi-moyeu (11, 12) et au premier et au second substrat (5, 8) par une matière de collage (18).

10. Procédé selon l'une quelconque des revendications 5 à 8, caractérisé en ce que le premier substrat (5) est raccordé au premier demi-moyeu (11) par une matière de collage (18), le second substrat (8) est raccordé au second demi-moyeu (12) par une matière de collage (18), et une entretoise interne (1) est disposée à l'extérieur des parties des flasque (15) du premier et du second demi-moyeu (11, 12), l'entretoise interne (1) étant raccordée aux parties de flasque (15; 15a) du premier et du second demi-moyeu (11, 12) et au premier et au second substrat (5, 8) par une matière de collage (18).

11. Procédé selon l'une quelconque des revendications 1 à 10, caractérisé en ce que le premier et le second substrat (5, 8) sont formés de verre, et le premier et le second demi-moyeu (11, 12) sont formés d'un alliage de fer, de nickel et de chrome, l'alliage contenant 42% en poids de nickel et 6% en poids de chrome.

12. Disque optique comprenant:

— un premier substrat (5) de disque ayant un trou central débouchant (17) dans lequel est introduite une partie cylindrique (14; 14a) d'un premier demi-moyeu (11), le premier demi-moyeu (11) ayant un trou central (13),

— un second substrat (8) de disque ayant un trou central débouchant (17) dans lequel est introuduite une partie cylindrique (14; 14a) d'un second demi-moyeu (12), le second demi-moyeu (12) ayant un trou central (13),

— une couche d'enregistrement (6) formée sur chacun des premier et second substrats (5, 8), la couche d'enregistrement (6) ayant des gorges préalables (7) et le premier et le second substrat (5, 8) étant raccordés l'un à l'autre avec les couches d'enrigistrement (6) tournées l'une vers l'autre, caractérisé en ce que:

— le premier et le second demi-moyeu (11, 12) sont introduits dans le premier et le second substrat (5, 8) respectivement, lors de la formation des gorges préalables (7), afin que chaque centre des gorges préalables (7) de la couche d'enregistrement (6) et des premier et second substrats (5, 8) coïncide avec le centre du trou central (13) des demi-moyeux associés (11, 12), et

— les surfaces du premier et du second demi-moyeu (11, 12) tournées l'une vers l'autre sont raccordées l'une à l'autre.

13. Disque optique selon la revendication 12, caractérisé en ce que le premier et le second demi-moyeu (11, 12) ont chacun un partie de flasque (15; 15a) à la première extrémité de la partie cylindrique (14; 14a), et la partie de flasque (15; 15a) du premier demi-moyeu (11) est raccordée à la partie de flasque (15; 15a) du second semi-moyeu (12).

14. Disque optique selon la revendication 12 ou 13, caractérisé en ce que le premier et le second demi-moyeu (11, 12) comportent chacun un corps cylindrique (14; 14a) et un corps de flasque (15; 15a) de forme annulaire, le corps de flasque (15, 15a) étant raccordé au corps cylindrique (14; 14a) afin qu'il forme un seul corps.

15. Disque optique selon la revendication 14, caractérisé en ce que le corps de flasque (15; 15a) est raccordé au corps cylindrique (14; 14a) par un matière de collage (18).

16. Disque optique selon l'une quelconque des revendications 13 à 15, caractérisé en ce que la partie de flasque (15; 15a) du premier demi-moyeu (11) est raccordée à la partie de flasque (15; 15a) du second demi-moyeu (12) par une matière de collage (18), la partie de flasque (15;

15a) du premier demi-moyeu (11) étant tournée vers la partie de flasque (15; 15a) du second demi-moyeu (12).

17. Disque optique selon l'une quelconque des revendications 13 à 16, caractérisé en ce qu'une cavité (16) de collage est formée sur au moins une surface d'extrémité des parties de flasque (15; 15a) du premier et du second demi-moyeu (11, 12), et la cavité (16) est remplie d'une matière de collage (18).

18. Disque optique selon l'une quelconque des revendications 13 à 17, caractérisé en ce que le premier substrat (5) est raccordé au premier demi-moyeu (11) par une matière de collage (18), le second substrat (8) est raccordé au second demi-moyeu (12) par une matière de collage (18), et une entretoise interne (1) est placée entre le premier et le second substrat (5, 8) l'entretoise interne (1) étant connectée aux surfaces externes des parties cylindriques (14; 14a) du premier et du second demi-moyeu (11, 12) et aux premier et second substrats (5, 8) par une matière de collage (18).

19. Disque optique selon l'une quelconque des revendications 13 à 17, caractérisé en ce que le premier substrat (5) est raccordé au premier demi-moyeu (11) par une matière de collage (18), le second substrat (8) et raccordé au second demi-moyeu (12) par une matière de collage (18), et une entretoise interne (1) est disposée à l'extérieur des parties de flasque (15; 15a) du premier et du second demi-moyeu (11, 12), l'entretoise interne (1) étant raccordée aux parties de flasque (15; 15a) du premier et du second demi-moyeu (11, 12) et au premier et au second substrat (5, 8) par une matière de collage (18).

20. Disque optique selon la revendication 12, caractérisé en ce que le premier et le second demi-moyeu (11, 12) ont une première surface de partie de flasque (14; 14a) qui a un organe cylindrique et le premier demi-moyeu (11) et le second demi-moyeu (12) sont raccordés sous forme symétrique.

21. Disque optique selon l'une quelconque des revendications 12 à 20, caractérisé en ce que le trou central respectif (13) du premier et du second demi-moyeu (11, 12) a un diamètre externe tel que ses surfaces cylindriques internes adhèrent à l'axe central (21) d'un poinçon (19) pour la formation de la couche d'enregistrement (6), si bien que l'axe central du trou central respectif (13) coïncide avec le centre du poinçon (19).

22. Disque optique selon l'une quelconque des revendications 12 à 21, caractérisé en ce que le trou central (13) du premier demi-moyeu (11) du premier substrat (5) et le trou central (13) du second demi-moyeu (12) du second substrat (8) sont raccordés régulièrement.

EP 0 192 244 B1

Fig. 1

Fig. 2

Fig. 3

Fig. 4

1

Fig. 5

Fig. 6

2

*Fig. 7*

Fig. 8(A)

17    5(8)

Fig. 8(B)

14
15    11(12)

16    13    15

Fig. 9

18  14  11(12)    5(8)

13   16    15

Fig. 10

18 14 13 21 11(12)  5(8) 22 20    19

15

Fig. 11

23    14  13 21    11(12)    22    5(8)    19
18

15

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25